# EUROPÄISCHE PATENTSCHRIFT

(11) **EP 1 625 594 B1**
(45) Veröffentlichungstag und Bekanntmachung des Hinweises auf die Patenterteilung: **21.04.2010**
(21) Anmeldenummer: 04801208.2
(22) Anmeldetag: 04.12.2004
(51) Int. Cl.: G21C 3/322

(54) **BRENNELEMENT FÜR EINEN DRUCKWASSERKERNREAKTOR UND MIT SOLCHEN BRENNELEMENTEN AUFGEBAUTER KERN EINES DRUCKWASSEKERNREAKTORS**
FUEL ELEMENT FOR A PRESSURISED WATER NUCLEAR REACTOR AND CORE OF A PRESSURISED WATER NUCLEAR REACTOR MADE OF SAID FUEL ELEMENTS
ELEMENT COMBUSTIBLE D'UN REACTEUR NUCLEAIRE A EAU SOUS PRESSION ET COEUR, CONSTITUE DE CES ELEMENTS DE COMBUSTIBLE, D'UN REACTEUR NUCLEAIRE A EAU SOUS PRESSION

(30) Priorität: 16.12.2003 DE 10358830
(43) Veröffentlichungstag der Anmeldung: 15.02.2006
(73) Patentinhaber: AREVA NP GmbH, 91052 Erlangen (DE)
(72) Erfinder: STABEL, Jürgen, 91058 Erlangen (DE); FUCHS, Hans-Peter, 90409 Nürnberg (DE); REN, Mingmin, 91058 Erlangen (DE)
(74) Vertreter: Mörtel & Höfner
(86) Internationale Anmeldenummer: PCT/EP2004/013817
(87) Internationale Veröffentlichungsnummer: WO 2005/059924

(56) Entgegenhaltungen:
- EP-A- 0 080 853
- DE-A1- 10 145 289

## Beschreibung

Die Erfindung bezieht sich auf ein Brennelement für einen Druckwasserkernreaktor und auf einen unter Verwendung eines solchen Brennelementes aufgebauten Kern eines Druckwasserkernreaktors.

Ein solches Brennelement ist aus EP 0 080 853 bekannt.

Aus zahlreichen Inspektionsresultaten ist es bekannt, dass sich die Brennelemente eines Druckwasserkernreaktors im Laufe ihrer Einsatzdauer in Abhängigkeit von ihrer Position im Kern verbiegen, so dass sich für den gesamten Kern systematische Durchbiegemuster ergeben können. Diese Durchbiegungen können verschiedene Ursachen haben, beispielsweise eine Anisotropie in der thermischen Ausdehnung oder ein durch radioaktive Strahlung induziertes Längenwachstum der Brennstabhüllrohre oder der Steuerstabführungsrohre. Als wesentliche Gründe für diese Durchbiegung werden jedoch vor allen Dingen eine Wechselwirkung zwischen dem strömenden Kühlwasser und dem Brennelement sowie Inhomogenitäten beim Ein- und Ausströmen des Kühlwassers in bzw. aus dem Kern vermutet. Aufgrund dieser systematischen Durchbiegungen entstehen an bestimmten, jedoch in vielen Fällen unbekannten Stellen des Kernes vergrößerte Spalte zwischen den einzelnen Brennelementen oder zwischen Brennelementen, die sich am Rand des Kerns befinden und der Kernumfassung, in denen das als Moderator dienende Kühlwasser fließt. Dies kann in ungünstigen Fällen eine Auswirkung auf Auslegungsgrenzen haben. Wären diese Stellen vergrößerter Spalte bekannt, könnte man die dort vorliegende erhöhte Moderation dadurch kompensieren, dass an diese Stellen gezielt Brennelemente oder Brennstäbe mit geringerer Leistung bzw. Anreicherung eingesetzt werden.

Der Erfindung liegt nun die Aufgabe zu Grunde, ein Brennelement anzugeben, das trotz auftretender Durchbiegung eine optimierte Auslegung des Kerns ermöglicht. Der Erfindung liegt außerdem die Aufgabe zugrunde, einen mit Hilfe eines solchen Brennelementes aufgebauten optimierten Kern anzugeben.

Die erstgenannte Aufgabe wird gemäß der Erfindung gelöst mit einem Brennelement mit den Merkmalen des Patentanspruches 1. Bei einem solchen Brennelement für einen Druckwasserkernreaktor sind eine Vielzahl von in Axialrichtung ausgedehnten Brennstäben in einer Mehrzahl voneinander beabstandeter gitterförmiger, quadratischer Abstandhalter geführt, deren Rand von jeweils vier Randstegen gebildet ist, wobei zumindest ein Abstandhalter zumindest zwei voneinander konstruktiv verschiedene Randstege zum Erzeugen einer vom strömenden Kühlwasser auf diesen Abstandhalter und somit auf das Brennelement in der Ebene dieses Abstandhalters quer zur Axialrichtung wirkenden Kraft aufweist.

Aufgrund einer solchen konstruktiven Ausgestaltung des Brennelementes sind die auf das Brennelement aufgrund des zwischen den Randstegen jeweils benachbarter Brennelemente oder zwischen dem Randsteg eines außenliegenden Brennelementes und der Kernumfassung strömenden Kühlmittels ausgeübten Kräfte abhängig von der konstruktiven Ausgestaltung der Randstege und greifen unsymmetrisch am Brennelement an. Die sich daraus ergebende, quer zur Axialrichtung wirkende Kraft ist aufgrund der konstruktiven Auslegung der Randstege bekannt, so dass sich auch die aufgrund der Fluid-Struktur-Wechselwirkungen auftretenden Verformungen gezielt beeinflussen und vorhersagen lassen. Auf diese Weise kann eine gezielte Durchbiegung eines Brennelementes und damit auch ein gezieltes Durchbiegemuster eines aus solchen Brennelementen aufgebauten Kernes oder eines Teilgebietes des Kernes erzeugt werden. Damit sind die Positionen, an denen die sich einstellenden großen Wasserspalte auftreten, a priori bekannt, so dass dort gezielt Brennelemente mit entsprechend kleiner Leistung eingesetzt werden können. Auf diese Weise kann die Einhaltung der Kernauslegungsgrößen sicher gewährleistet werden.

Die Erfindung beruht dabei auf der Überlegung, dass die auf ein Brennelement in der Ebene eines Abstandhalters wirkenden Kräfte im wesentlichen verursacht sind durch die Druckdifferenz, die sich aufgrund der unterschiedlich hohen Strömungsgeschwindigkeit des Kühlwassers im Spalt zwischen den Abstandhaltern und innerhalb des Brennelementes einstellt. Diese Druckdifferenz kann durch einfache konstruktive Maßnahmen an den Randstegen beeinflusst werden, so dass auf einfache Weise eine Einstellung der sich jeweils zwischen dem Brennelement an den angrenzenden Wasserspalten ergebenden Druckdifferenzen und somit eine gezielte Beeinflussung der auf das Brennelement wirkenden Nettokraft erfolgen kann.

In einer bevorzugten Ausführungsform liegen die zwei konstruktiv voneinander verschiedenen Randstege einander gegenüber, so dass eine Nettokraft auf das Brennelement erzeugt wird, die quer zur Axialrichtung des Brennelements und annähernd senkrecht zu diesen zwei Randstegen verläuft, wenn die anderen beiden Randstege konstruktiv gleich sind. Unterscheiden sich auch die anderen beiden gegenüberliegenden Randstege, so kann die Nettokraft auch schräg zu den Randstegen verlaufen, wobei der Winkel entsprechend der konstruktiven Ausgestaltung einstellbar ist.

In einer weiteren bevorzugten Ausgestaltung der Erfindung unterscheiden sich die zwei voneinander konstruktiv verschiedenen Randstege dadurch, dass sie eine voneinander verschiedene Anzahl, Gestalt und/oder Anordnung von Öffnungen aufweisen.

Alternativ oder ergänzend hierzu können die zwei voneinander konstruktiv verschiedenen Randstege auch voneinander verschiedene Strömungsleit- oder Strömungsabweisfahnen aufweisen. Dies bewirkt ebenfalls eine Asymmetrie der zwischen Spalt und Brennelement auftretenden Druckdifferenzen, so dass auch in diesem Fall eine resultierende Querkraft verbleibt, deren Ausmaß und Richtung die Durchbiegung des Brennelementes gezielt beeinflusst.

In einer bevorzugten Ausgestaltung der Erfindung ist der zumindest eine Abstandhalter im Mittenbereich des Brennelementes angeordnet. Dadurch ist eine besonders effektive Beeinflussung der Durchbiegung ermöglicht, da eine im Mittenbereich auf das Brennelement wirkende Querkraft das Ausmaß der Durchbiegung maximal beeinflusst.

Die zweitgenannte Aufgabe wird gelöst mit einem Kern mit dem Merkmalen des Patentanspruches 6. Gemäß diesen Merkmalen sind in einem solchen Kern erfindungsgemäße Brennelemente derart angeordnet, dass die auf diese Brennelemente quer zur Axialrichtung wirkenden Kräfte wenigstens annähernd parallel zueinander sind. Dadurch wird eine gezielte, systematische, in eine einzige Richtung wirkende Durchbiegung erzeugt und die Lage der größten Wasserspalte eindeutig festgelegt.

Vorzugsweise weisen die in einem der wirkenden Kraft abgewandten Randbereich des Kerns angeordneten Brennelemente eine geringere Leistung auf als die Brennelemente in den anderen Randbereichen. Auf diese Weise kann die im Bereich der großen Wasserspalte auftretende größere Moderation kompensiert werden.

Zur weiteren Erläuterung der Erfindung wird auf das Ausführungsbeispiel der Zeichnung verwiesen. Es zeigen:
Fig. 1 einen erfindungsgemäßen Kern eines Druckwasserkernreaktors in einem schematisierten Schnittbild,
Fig. 2 einen Längsschnitt durch den Kern ebenfalls in einer schematischen Prinzipskizze,
Fig. 3 eine ebenfalls schematische Teilansicht auf einander benachbarte Brennelemente, von denen eines gemäß der Erfindung ausgelegt ist.

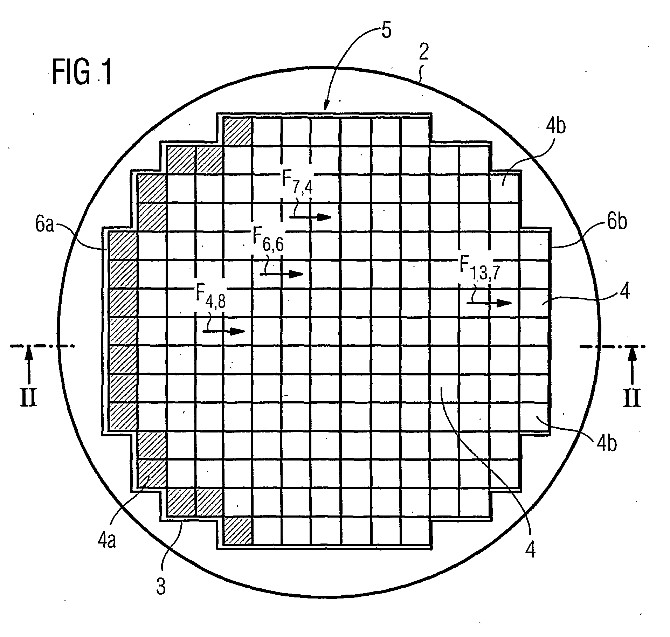

Gemäß Fig. 1 ist innerhalb einer in einem Kernbehälter 2 fixierten Kernumfassung 3 ein aus einer Vielzahl von im Querschnitt quadratischen Brennelementen 4 aufgebauter Kern 5 angeordnet. Die Figur zeigt einen schematischen Querschnitt in etwa der Mitte des Kerns. Der Figur ist nun zu entnehmen, dass der gesamte Kern 5 in der Mitte eine Durchbiegung nach rechts aufweist, die zu einem vergrößerten Wasserspalt 6a zwischen den am linken Rand befindlichen, durch Schraffur hervorgehobenen Brennelementen 4a und der links befindlichen Kernumfassung 3 führt. Entsprechend ist der Wasserspalt 6b zwischen den am rechten Rand befindlichen Brennelementen 4b und der Kernumfassung 3 verringert. Der Kern 5 weist somit eine, in der Figur grob schematisch veranschaulichte, systematische Durchbiegung in seiner Gesamtheit zum rechten Rand auf. Diese wird verursacht durch auf zumindest eine Teilmenge der Brennelemente 4 jeweils ausgeübte gerichtete Kräfte F_{i,j}, die sich je nach Position i,j des Brennelementes 4 im Kern 5 betragsmäßig voneinander unterscheiden können, jedoch zumindest annähernd parallel zueinander sind. In der Figur sind aus Gründen der Übersichtlichkeit nur die auf die Brennelemente 4 in den Positionen (4,8), (6,6), (7,4) und (13,7) jeweils wirkenden Kräfte F_{i,j} eingezeichnet.

Um die im Spalt 6a erhöhte Moderation zu kompensieren, können in einer vorteilhaften Auslegung des Kerns 5 die Brennelemente 4a, die im den wirkenden Kräften F_{i,j} abgewandten Randbereich angeordnet sind, eine geringere Leistung aufweisen als die Brennelemente 4b in den anderen Randbereichen.

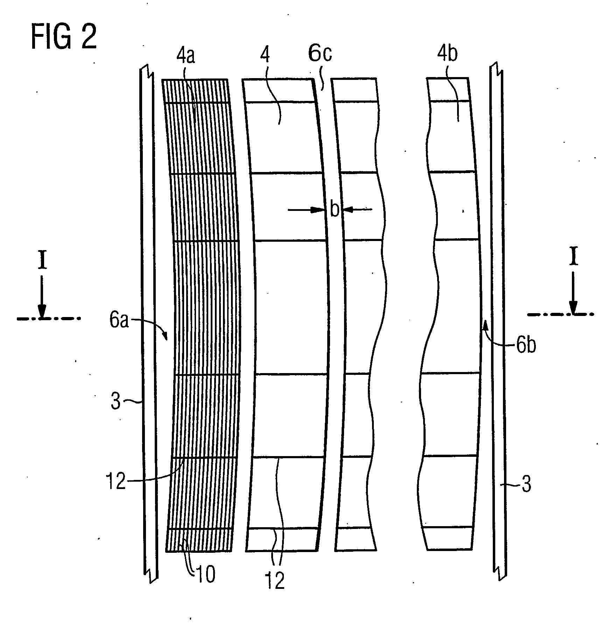

Die im Kern 5 vorliegende Situation ist im Längsschnitt gemäß Fig. 2 deutlicher zu erkennen. Diesem Längsschnitt ist zu entnehmen, dass die Brennelemente 4 eine gleich gerichtete, C-förmige Durchbiegung aufweisen, die die Breite b des Spaltes 6c zwischen den einzelnen Brennelementen 4 nahezu nicht beeinflusst. Mit anderen Worten: Die Spaltbreite b bleibt über die gesamte Länge des Brennelementes 4 nahezu konstant und entspricht in etwa der Spaltbreite, wie sie im Anfangszustand, bei frischen, nicht durchgebogenen Brennelementen vorliegt. Die systematische Durchbiegung der Brennelemente 4 führt jedoch zu einem vergrößerten Wasserspalt 6a wischen dem am Rand befindlichen Brennelement 4a und der Kernumfassung 3 und zu einem entsprechend verringertem Wasserspalt 6b zwischen der Kernumfassung 3 und dem am rechten Rand befindlichen Brennelement 4b.

In den Brennelementen 4 sind in Axialrichtung jeweils eine Vielzahl von Brennstäben 10 angeordnet, die in quadratischen gitterförmigen Abstandhaltern 12 geführt sind. Aus Gründen der Übersichtlichkeit sind die Abstandhalter 12 nur stark schematisch veranschaulicht und die Brennstäbe 10 ebenfalls in einer schematisch vereinfachten Darstellung nur im linken Brennelement 4a eingezeichnet.

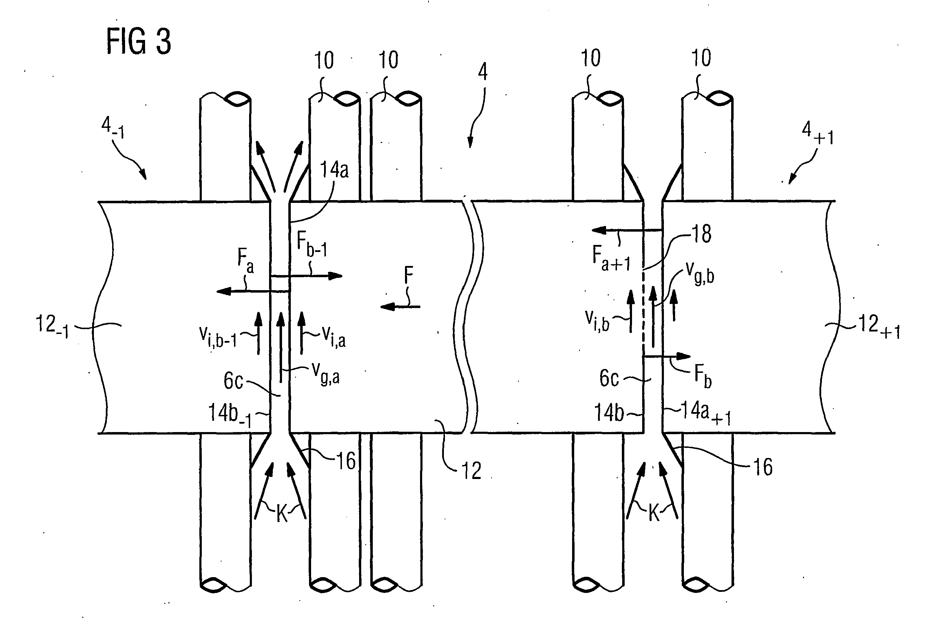

Gemäß Fig. 3 ist ein Brennelement 4 im Bereich seines Abstandhalters gemeinsam mit benachbarten Brennelementen 4₋₁, 4₊₁ dargestellt. In der Fig. ist nun das mittlere Brennelement 4 gemäß der Erfindung gestaltet und weist einen Abstandhalter 12 auf, dessen einander gegenüberliegende Randstege 14a,b konstruktiv voneinander verschieden sind. Der Randsteg 14a ist im Ausführungsbeispiel glattwandig, d.h. nicht mit Öffnungen versehen, und trägt an seinen Stirnseiten jeweils Strömungsleitfahnen 16, die zu einer verstärkten Einleitung des von unten anströmenden Kühlwassers K in den Spalt 6c zwischen den Randstegen 14b₋₁, 14a der benachbarten Brennelemente 4, 4₋₁ führen. In diesem Spalt 6c erfolgt eine Beschleunigung des Kühlwassers K, so dass aufgrund der sich einstellenden Geschwindigkeit v_{g,a} im Spalt 6c einerseits und der Geschwindigkeiten v_{i,a} bzw. v_{i,b-1} im Inneren des Abstandhalters 12 bzw. 12₋₁ Druckdifferenzen aufbauen, die eine auf das Brennelement 4 wirkende Kraft Fₐ bzw. auf das Brennelement 4₋₁ wirkende Kraft F_{b-1} erzeugt (verallgemeinerter Bernouilli-Effekt).

In der Fig. ist nun eine Situation veranschaulicht, in der die einander benachbarten Randstege 14a, 14b₋₁ konstruktiv identisch ausgeführt sind. Dies würde nun dazu führen, dass die beiden Kräfte Fₐ und F_{b-1} gleich groß sind, so dass sich die auf das Brennelement 4 in der Ebene des Abstandhalters 12 wirkenden Kräfte bei symmetrischer Gestaltung des Abstandhalters 12 und unter der Annahme, dass die Einströmverhältnisse sich nicht wesentlich zwischen den einander gegenüberliegenden Randstegen 14a und 14b ändern, kompensieren würden.

Gemäß der Erfindung ist nun vorgesehen, zumindest zwei Randstege des Abstandhalters 12, im Beispiel den Randsteg 14a und den gegenüberliegenden Randsteg 14b konstruktiv unterschiedlich auszuführen, wie dies im Beispiel der Figur durch gestrichelt dargestellte Öffnungen 18 sowie durch eine im Anströmbereich fehlende Strömungsleitfahne veranschaulicht ist. Beide Maßnahmen, die sowohl alternativ als auch kumulativ eingesetzt werden können, führen nun dazu, dass die sich nunmehr einstellende Differenz zwischen der Geschwindigkeit v_{g,b} im Spalt 6c zwischen den Abstandhaltern 12 und 12₊₁ und der Geschwindigkeit v_{i,b} im Inneren des Brennelementes 12 verringert ist, so dass die auf das Brennelement 12 auf dieser Seite ausgeübte Kraft F_{b} kleiner ist als die entgegengesetzt gerichtete Kraft Fₐ, die auf der gegenüberliegenden Seite ausgeübt wird. Damit wirkt auf das Brennelement im Bereich dieses Abstandhalters 12 eine Nettokraft F = Fₐ - F_{b}, die zu einer kontrollierten Durchbiegung dieses Brennelementes 4 führt.

Am Randsteg 14a₊₁ wirkt nun auf das Brennelement 12₊₁ eine Kraft Fₐ₊₁, die aufgrund der im rechten Spalt 6c geänderten Strömungsverhältnisse nicht der auf das Brennelement 12 wirkenden Kraft Fₐ entspricht. Um auch auf das Brennelement 12₊₁ eine nach links wirkende Nettokraft zu erzeugen, muss dessen in der Figur nicht mehr dargestellte rechter Randsteg ebenfalls mit Mitteln zur Verringerung der Druckdifferenz zwischen dem Spalt und dem Inneren des Brennelements 12₊₁ analog zu den am Randsteg 14b veranschaulichten Maßnahmen versehen werden. Werden alle Abstandhalter, die sich in einer Ebene, beispielsweise in der Mittenebene des Kerns befinden, in gleicher Weise aufgebaut wie der Abstandhalter 12 (in diesem Falle wäre der Randsteg 14b₋₁ abweichend zur Figur konstruktiv in gleicher Weise zu gestalten wie der Randsteg 14b), so wird auf alle Brennelemente eine nach links wirkende Kraft ausgeübt und es stellt sich eine systematische Durchbiegung des Kerns ein, die spiegelsymmetrisch zu den in Fig. 1 und 2 dargestellten Ausführungsbeispielen ist.

Aufgrund der unterschiedlichen Einströmungsverhältnisse in den Kern und Ausströmungsverhältnisse aus dem Kern, ist es unter Umständen zweckmäßig, die asymmetrischen Abstandhalter je nach Position des Brennelementes im Kern konstruktiv unterschiedlich zu gestalten oder deren Anzahl im Brennelement zu variieren, d. h. in einem Brennelement eine Mehrzahl asymmetrischer Abstandhalter vorzusehen, um dessen Durchbiegung angepasst an die lokalen Verhältnisse an seiner Position im Kern systematisch zu beeinflussen.

## Patentansprüche

1. Brennelement (4) für einen Druckwasserkernreaktor, bei dem eine Vielzahl von in Axialrichtung ausgedehnten Brennstäben (10) in einer Mehrzahl voneinander beabstandeter gitterförmiger quadratischer Abstandhalter (12) geführt sind, deren Rand jeweils von vier Randstegen (14a,b) gebildet ist, **dadurch gekennzeichnet dass** zumindest ein Abstandhalter (12) zumindest zwei voneinander konstruktiv verschiedene Randstege (14a,b) zum Erzeugen einer vom strömenden Kühlwasser (K) auf diesen Abstandhalter (12) und damit auf das Brennelement (4) in der Ebene dieses Abstandhalters (12) quer zur Axialrichtung wirkenden Kraft (F) aufweist.

2. Brennelement nach Anspruch 1, bei dem die zwei voneinander konstruktiv verschiedenen Randstege (14a,b) einander gegenüberliegen.

3. Brennelement nach Anspruch 1 oder 2, bei dem sich die zwei voneinander konstruktiv verschiedenen Randstege (14a,b) durch eine voneinander verschiedene Anzahl, Gestalt und/oder Anordnung von Öffnungen (18) unterscheiden.

4. Brennelement nach einem der vorhergehenden Ansprüche, bei dem die zwei voneinander konstruktiv verschiedenen Randstege (14a,b) voneinander verschiedene Strömungsleitfahnen (16) aufweisen.

5. Brennelement nach einem der vorhergehenden Ansprüche, bei dem der zumindest eine Abstandhalter (12) im Mittenbereich des Brennelementes (4) angeordnet ist.

6. Kern (5) eines Druckwasserkernreaktors mit einer Mehrzahl von Brennelementen (4) nach einem der vorhergehenden Ansprüche, die derart angeordnet sind, dass die auf die Brennelemente (4) quer zur Axialrichtung wirkenden Kräfte (F) wenigstens annähernd parallel zueinander sind.

## Claims

1. Fuel assembly (4) for a pressurized-water nuclear reactor, in which a multiplicity of fuel rods (10) extending in the axial direction are guided in a plurality of grid-like, square spacers (12) which are spaced apart from one another and the edge of which is in each case formed by four edge webs (14a,b), **characterized in that** at least one spacer (12) has at least two differently designed edge webs (14a,b) for generating a force (F) which acts from the flowing cooling water (K) on this spacer (12) and hence on the fuel assembly (4) in the plane of this spacer (12) transversely with respect to the axial direction.

2. Fuel assembly according to Claim 1, in which the two differently designed edge webs (14a,b) lie opposite one another.

3. Fuel assembly according to Claim 1 or 2, in which the two differently designed edge webs (14a,b) differ by virtue of having a different number, shape and/or arrangement of openings (18).

4. Fuel assembly according to one of the preceding claims, in which the two differently designed edge webs (14a,b) have different mixing vanes (16).

5. Fuel assembly according to one of the preceding claims, in which the at least one spacer (12) is arranged in the center region of the fuel assembly (4).

6. Core (5) of a pressurized-water nuclear reactor with a plurality of fuel assemblies (4) according to one of the preceding claims, which are arranged in such a manner that the forces (F) acting on the fuel assemblies (4) transversely with respect to the axial direction are at least approximately parallel to one another.

## Revendications

1. Elément combustible (4) pour un réacteur nucléaire à eau sous pression, sur lequel une pluralité de crayons combustibles (10) étendus dans la direction axiale sont guidés dans une pluralité d'écarteurs (12) carrés en forme de grille, espacés les uns des autres, dont le bord est formé respectivement par quatre barrettes de bordure (14a, b), au moins un écarteur (12) présentant au moins deux barrettes de bordure (14a, b) de construction différente pour générer une force (F) agissant à partir de l'eau de refroidissement (K) en circulation sur cet écarteur (12) et donc sur l'élément combustible (4) dans le plan de cet écarteur (12) transversalement à la direction axiale.

2. Elément combustible selon la revendication 1, sur lequel les deux barrettes de bordure (14a, b) de construction différente se font face.

3. Elément combustible selon la revendication 1 ou 2, sur lequel les deux barrettes de bordure (14a, b) de construction différente se différencient par un nombre, une forme et/ou un agencement d'ouvertures (18) qui sont différents les uns des autres.

4. Elément combustible selon l'une quelconque des revendications précédentes, sur lequel les deux barrettes de bordure (14a, b) de construction différente présentent des pattes conductrices d'écoulement (16) différentes les unes des autres.

5. Elément combustible selon l'une quelconque des revendications précédentes, sur lequel un écarteur (12) au nombre minimum de un est disposé dans la zone centrale de l'élément combustible (4).

6. Noyau (5) d'un réacteur nucléaire à eau sous pression comprenant une pluralité d'éléments combustibles (4) selon l'une quelconque des revendications précédentes, qui sont disposés de telle sorte que les forces (F) agissant sur les éléments combustibles (4) transversalement dans la direction axiale sont au moins approximativement parallèles entre elles.
